(19) Europäisches Patentamt
European Patent Office
Office européen des brevets

(11) **EP 4 545 909 A1**

(12) **DEMANDE DE BREVET EUROPEEN**

(43) Date de publication:
**30.04.2025 Bulletin 2025/18**

(21) Numéro de dépôt: **23205270.4**

(22) Date de dépôt: **23.10.2023**

(51) Classification Internationale des Brevets (IPC):
**G01C 25/00** (2006.01) **G01C 21/16** (2006.01)

(52) Classification Coopérative des Brevets (CPC):
**G01C 21/165; G01C 25/005**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **SBG Systems**
**78420 Carrières-sur-Seine (FR)**

(72) Inventeurs:
• **BENET, Pierre**
**72400 La Ferté-Bernard (FR)**
• **SAIDANI, Mourad**
**95800 Cergy (FR)**
• **GUINAMARD, Alexis**
**78400 CHATOU (FR)**

(74) Mandataire: **Aquinov**
**12, Cours Xavier Arnozan**
**33000 Bordeaux (FR)**

(54) **PROCÉDÉ D ALIGNEMENT D'UN SYSTÈME DE NAVIGATION INERTIELLE**

(57) L'invention concerne un procédé d'alignement d'un système de navigation inertielle, comportant les étapes : (E1, E2) Réception de premières données de position (GNSS) et de deuxièmes données de mouvement (a,u) ; (E3) Génération d'un jeu (x) « a priori » de paramètres d'initialisation de l'alignement ($\theta_0$, $v_0$, $b_g$, $b_a$); (E4) Correction du jeu « a priori » pour obtenir un jeu optimal par les sous-étapes suivantes : (E41) Estimation de troisièmes données de position ($p_t$) à partir des premières et deuxièmes données et d'un jeu corrigé de paramètres d'initialisation ; (E42) Calcul de valeurs de correction ($\Delta x$) du jeu qui minimisent une fonction d'erreur déterminée à partir des premières et deuxièmes données ; (E425) Correction du jeu à l'aide des valeurs de correction ; le premier jeu corrigé étant déterminé à partir du jeu « a priori » et ladite étape de correction étant itérée jusqu'à ce qu'une condition d'arrêt soit satisfaite et/ou qu'un nombre prédéterminé d'itérations soit atteint.

[Fig. 1]

EP 4 545 909 A1

**Description**

L'invention concerne le domaine des systèmes de navigation inertielle. Plus précisément, l'invention concerne un procédé d'alignement d'un système de navigation inertielle embarqué sur un dispositif mobile.

Un système de navigation inertielle, ou INS, comporte une centrale inertielle équipée d'accéléromètres et de gyromètres, dont les mesures peuvent être intégrées pour calculer la position, la vitesse et l'orientation de la centrale inertielle et, par conséquent, du dispositif dans lequel le système est embarqué. Afin de pouvoir estimer ces données de façon fiable, il est nécessaire que le système dispose de certains paramètres initiaux de la centrale inertielle, comme sa vitesse initiale et son orientation initiale.

Le système de navigation inertielle doit ainsi, au démarrage de la navigation, mettre en oeuvre un procédé d'initialisation appelée « alignement » pour déterminer ces paramètres initiaux.

La vitesse et la position peuvent être facilement déterminées par exemple au moyen de données de position par exemple de type GNSS (Global Navigation Satellite System). Toutefois, il est possible que le procédé d'alignement doive exploiter des données de position acquises dans des scénarios compliqués, les données résultant de ces scénarios pouvant être peu nombreuses, incomplètes ou imprécises.

Par ailleurs, l'orientation est plus difficile à initialiser. Plusieurs méthodes d'initialisation de cette attitude sont disponibles dans la littérature.

Les méthodes de type « alignement de trajectoire » requièrent que le dispositif embarquant le système suive une trajectoire droite avec une vitesse importante, sans vitesse latérale. Cette hypothèse fonctionne lorsque ce dispositif est une voiture, mais est souvent prise à défaut pour un avion ou un bateau, compte tenu du vent ou du courant, voire pour un piéton dont la démarche présente un balancement ou un vacillement.

Les méthodes de type « alignement magnétique », emploient une boussole magnétique, laquelle peut fournir l'orientation initiale. Cette méthode peut toutefois être défaillante lorsque des objets métalliques se trouvent dans l'environnement du système.

L'emploi d'un gyrocompas peut permettre de déduire l'orientation initiale mais accroît fortement le coût du système.

Les méthodes de type « alignement par double antennes » nécessite d'installer deux antennes sur le dispositif embarquant le système, qui doivent être suffisamment éloignées l'une de l'autre. Cette contrainte complexifie la configuration et accroit l'encombrement du système, qui peut le rendre incompatible avec des dispositifs légers, notamment destinés à des piétons.

Aucune de ces méthodes ne permet ainsi de s'affranchir de la connaissance a priori du type du porteur du système, et ainsi de garantir que les paramètres initiaux du système de navigation inertielle peuvent être estimés correctement, quel que soit ce type de porteur.

La présente invention se place ainsi dans ce contexte et vise à répondre à ce besoin.

A ces fins, l'invention a pour objet un procédé d'alignement d'un système de navigation inertielle embarqué sur un dispositif mobile, le système comportant au moins une centrale inertielle et un dispositif de géolocalisation, caractérisé en ce qu'il comporte les étapes suivantes :

a. Réception d'un premier ensemble de données de position du dispositif mobile acquises par le dispositif de géolocalisation sur une durée donnée ;
b. Réception d'un deuxième ensemble de données de mouvement du dispositif mobile pendant ladite durée ;
c. Génération d'un jeu « a priori » de paramètres d'initialisation de l'alignement du système de navigation inertielle ;
d. Correction du jeu « a priori » de paramètres d'initialisation pour obtenir un jeu optimal de paramètres d'initialisation, ladite étape de correction comportant les sous-étapes suivantes :

i. Estimation d'un troisième ensemble de données de position du dispositif mobile sur ladite durée donnée, la première donnée du troisième ensemble de données de position étant estimée à partir du premier ensemble de données de position ; et chaque donnée suivante du troisième ensemble étant estimée à partir d'au moins une donnée du deuxième ensemble de données de mouvement et d'un jeu corrigé de paramètres d'initialisation ;
ii. Calcul de valeurs de correction du jeu de paramètres d'initialisation qui minimisent une fonction d'erreur donnée, déterminée à partir du premier ensemble de données de position et du troisième ensemble de données de position ;
iii. Correction du jeu corrigé de paramètres d'initialisation à l'aide des valeurs de correction ;

le premier jeu corrigé étant déterminé à partir du jeu « a priori » de paramètres d'initialisation et ladite étape de correction étant itérée jusqu'à ce qu'une condition d'arrêt prédéterminée dépendant des valeurs de correction soit satisfaite et/ou qu'un nombre prédéterminé d'itérations soit atteint, le dernier jeu corrigé formant le jeu optimal de paramètres d'initialisation.

Selon l'invention, des données de position, sont acquises pendant une période durant laquelle le dispositif mobile, ou porteur, qui embarque le système de navigation s'est déplacé. Ces données de position pourront être par exemple des données de type GNSS incluant des coordonnées selon un référentiel à trois axes, ou en variante d'un autre type de données de géolocalisation. Compte tenu du déplacement du porteur, des données de mouvement sont donc également acquises par la centrale inertielle pendant cette même durée. De façon classique, ces données peuvent comporter une mesure de l'accélération du porteur selon chacun des trois axes du référentiel et une mesure de la vitesse angulaire du porteur selon chacun de ces trois axes.

Il est ainsi possible, en intégrant ces données de mouvement au travers des équations de mécanisation de la centrale inertielle et à partir de l'une des données de position d'estimer une trajectoire à l'aveugle du porteur. Cette trajectoire dépend sensiblement du jeu de paramètres d'initialisation de la centrale inertielle que l'invention cherche à estimer, de sorte qu'il est possible de définir une fonction d'erreur entre cette trajectoire estimée et la trajectoire traduite par les données de position, cette fonction dépendant ainsi de ce jeu de paramètres d'initialisation.

L'invention se propose ainsi de générer un jeu de paramètres initiaux dit « a priori », pouvant être déterminés de façon arbitraire ou à partir d'informations connus sur les capteurs de la centrale inertielle ou sur le porteur lui-même. Ce jeu de paramètres « a priori » va alors être corrigé de façon itérative, via une méthode de type moindres carrés non linéaires. Selon cette méthode, à chaque itération, les valeurs du jeu de paramètres initiaux actuelles sont réintroduites dans les équations de mécanisation de la centrale inertielle pour redéterminer une trajectoire à l'aveugle du porteur, ainsi que l'erreur entre la trajectoire réelle traduite par les données de position et cette trajectoire à l'aveugle. Une valeur de correction de chaque paramètre initial est déterminée en minimisant cette fonction d'erreur, par une méthode de type moindre carré linéaire et les valeurs du jeu de paramètres initiaux actuelles sont corrigées à l'aide de ces valeurs de correction, pour pouvoir procéder à une nouvelle itération. Ces itérations se poursuivent jusqu'à ce qu'un nombre donné d'itérations soit atteint ou qu'une condition d'arrêt, permettant de considérer que l'algorithme a convergé vers un jeu optimal, soit satisfaite. L'invention permet donc d'obtenir un jeu optimal de paramètres initiaux, dans un temps court, et quel que soit le type de porteur.

Dans l'invention, on entend par « données de position » des données acquises par un dispositif de géolocalisation, indiquant la position du porteur dans un référentiel donné. Il pourra s'agir de données de type GNSS, par exemple GPS ou Galileo, reçues par un récepteur embarqué sur le porteur, ces données incluant des coordonnées selon trois axes dudit référentiel. Il pourra encore s'agir de données d'identification d'une ou plusieurs antennes de télécommunication, notamment de type GSM, Wifi ou RFID, localisées au voisinage du porteur, le dispositif de géolocalisation comportant alors une unité de calcul pour déterminer la position du porteur à partir desdites données reçues.

Dans l'invention, on entend par « données de mouvement » des données relatives au mouvement du porteur dans un référentiel donné, estimées par des capteurs d'une centrale inertielle. La centrale inertielle pourra par exemple être une centrale 6 axes, comportant trois accéléromètres chacun apte à mesurer une accélération du porteur selon l'un des axes du référentiel donné et trois gyromètres chacun apte à mesurer une vitesse angulaire du porteur selon l'un des axes du référentiel donné. De préférence, le référentiel des données de position sera identique à celui des données de mouvement.

De préférence, dans l'invention, les étapes de génération et de correction ne seront mises en oeuvre qu'à la condition que le premier ensemble de données de position et/ou que le deuxième ensemble de données de mouvement indique un déplacement du dispositif mobile pendant ladite durée.

De préférence toujours, chaque donnée de position du premier ensemble comporte une information horaire et l'étape de calcul des valeurs de correction emploie uniquement les données du troisième ensemble de données de position qui ont été estimées pour des instants correspondant auxdites informations horaires des données du premier ensemble.

Dans un mode de réalisation de l'invention, pour chaque sous-étape d'estimation, la première donnée du troisième ensemble de données de position est estimée à partir de la dernière donnée du premier ensemble de données de position. Le cas échéant, chaque donnée suivante du troisième ensemble de données de position est estimée de façon récursive à partir de la donnée du troisième ensemble de données de position précédemment estimée et de la donnée du deuxième ensemble de données de position précédant celle utilisée pour l'estimation de la donnée du troisième ensemble précédemment estimée. En d'autres termes, selon cette caractéristique, la dernière donnée de position acquise par le dispositif de géolocalisation est employée pour initialiser le calcul de la trajectoire à l'aveugle du porteur, et cette trajectoire est estimée à rebours à partir de cette dernière donnée de position. Grâce à cette caractéristique, le jeu optimal de paramètres d'initialisation qui est obtenu à l'issue du procédé selon l'invention est à jour, au regard de la position du porteur, et peut donc être utilisé en l'état par le système de navigation inertielle, notamment par un filtre de Kalman.

Dans un mode de réalisation de l'invention, chaque donnée du deuxième ensemble de données de mouvement comporte une accélération de la centrale inertielle et une vitesse angulaire de la centrale inertielle, et le jeu de paramètres d'initialisation comporte une orientation initiale de la centrale inertielle et une vitesse initiale de la centrale inertielle. Le cas échéant, dans chaque sous-étape d'estimation du troisième ensemble de données de chaque itération de l'étape de correction, l'estimation de chaque donnée suivante comporte :

a. l'estimation d'une orientation de la centrale inertielle à partir de l'orientation précédemment estimée et de la vitesse angulaire d'une donnée du deuxième ensemble;

b. l'estimation d'une vitesse de la centrale inertielle à partir de la vitesse précédemment estimée, de l'orientation précédemment estimée et de l'accélération d'une donnée du deuxième ensemble ;

c. l'estimation d'une position de la centrale inertielle à partir de la position précédemment estimée et de la vitesse précédemment estimée.

En d'autres termes, selon cette caractéristique, le jeu de paramètres d'initialisation « a priori » comporte une orientation initiale « a priori », par exemple sous la forme d'un triplet d'orientations selon chacun des axes du référentiel, et une vitesse initiale « a priori », par exemple sous la forme d'un triplet de vitesses selon chacun des axes du référentiel. A chaque nouvelle itération, une nouvelle orientation peut ainsi être déterminée à partir de l'orientation déterminée lors de l'itération précédente, et une nouvelle vitesse et une nouvelle position peuvent être estimées à partir de cette nouvelle orientation afin de reconstruire une trajectoire à l'aveugle.

Par exemple, les orientations, vitesses et positions du troisième ensemble de données pourront être estimées de façon récursive, à chaque itération de l'étape de correction, au moyen des équations suivantes :

$$[\text{Math. 1}]\ R_{t,i} = R_{t,i-1}.e^{w_t.\Delta t}$$
$$v_{t,i} = v_{t,i} + (R_{t,i}.a_t + g).\Delta t$$
$$p_{t,i} = p_{t,i} + v_{t,i}.\Delta t$$

où $R_{t,i}$, $v_{t,i}$ et $p_{t,i}$ sont respectivement une orientation, une vitesse et une position de la centrale inertielle déterminée à un instant t, lors de la ième itération, $w_t$ et at sont respectivement une vitesse angulaire et une accélération mesurée par la centrale inertielle à un instant t, g est le vecteur de l'accélération de la pesanteur et $\Delta t$ est un pas temporel employé pour l'estimation successive des orientations, vitesses et positions lors d'une même itération de l'étape de correction.

On comprend ainsi que, lors de la première itération, les différentes orientation $R_{t,1}$, vitesses $v_{t,1}$ et positions $p_{t,1}$ de la centrale inertielle sont estimées récursivement à partir de la position initiale $p_{0,0}$, qui peut notamment être la dernière position $GNSS_0$ acquise par le dispositif de géolocalisation, de l'orientation initiale « a priori » $R_{0,0}$ et de la vitesse initiale « a priori » $v_{0,0}$. Chaque nouvelle itération de l'étape de correction permet ainsi de corriger cette orientation initiale et cette vitesse initiale jusqu'à parvenir à une orientation initiale « optimale » et une vitesse initiale « optimale ».

Selon un exemple de réalisation, la vitesse initiale du jeu « a priori » est fixée à une valeur nulle et l'orientation initiale du jeu « a priori » est déterminée au préalable à partir de la moyenne de mesures de la gravité acquises par la centrale inertielle pendant ladite durée donnée. Ces mesures de la gravité permettent en effet d'obtenir, au préalable des itérations de l'étape de correction, une mesure grossière du tangage, ou pitch, et du roulis, ou roll, de la centrale inertielle, et donc d'accélérer la convergence de la méthode des moindres carrés non linéaire vers des valeurs optimales de la vitesse initiale et de l'orientation initiale. En variante, on pourra prévoir que l'orientation initiale du jeu « a priori » soit une matrice identité.

Avantageusement, l'orientation initiale de la centrale inertielle est définie à la fois par une correction angulaire initiale et une matrice de rotation initiale. Le cas échéant, on pourra prévoir que la correction angulaire initiale soit réinitialisée à une valeur nulle à chaque itération de l'étape de correction, que la matrice de rotation initiale soit déterminée, à chaque itération de l'étape de correction, à partir de la matrice de rotation initiale précédente et de la correction angulaire initiale, que chaque estimation d'une orientation de la centrale inertielle soit une estimation de la matrice de rotation de la centrale inertielle à partir de la matrice de rotation précédemment estimée et de la vitesse angulaire d'une donnée du deuxième ensemble.

Selon cette caractéristique, l'orientation initiale de la centrale inertielle est définie, à chaque itération, seulement par la matrice de rotation initiale. Cette matrice de rotation est ainsi corrigée par la valeur de correction de l'orientation obtenue à l'issue de l'étape de correction, puis cette valeur de correction est réinitialisée. On évite ainsi un problème de blocage de cardan, ou gimbal lock.

Dans un mode de réalisation de l'invention, le jeu de paramètres d'initialisation comporte un biais d'un accéléromètre de la centrale inertielle et un biais d'un gyromètre de la centrale inertielle. Le cas échéant, dans chaque sous-étape d'estimation du troisième ensemble de données de chaque itération de l'étape de correction, l'estimation de chaque donnée suivante comporte :

a. l'estimation d'une orientation de la centrale inertielle à partir de l'orientation précédemment estimée, de la vitesse angulaire d'une donnée du deuxième ensemble et du biais du gyromètre ;

b. l'estimation d'une vitesse de la centrale inertielle à partir de la vitesse précédemment estimée, de l'orientation précédemment estimée, de l'accélération d'une donnée du deuxième ensemble et du biais de l'accéléromètre ;

c. l'estimation d'une position de la centrale inertielle à partir de la position précédemment estimée et de la vitesse précédemment estimée.

En d'autres termes, selon cette caractéristique, le jeu de paramètres d'initialisation « a priori » peut comporter, en plus de l'orientation initiale « a priori » et de la vitesse initiale « a priori », un biais initial du gyromètre « a priori » et un biais initial de l'accéléromètre « a priori ». Ces biais initiaux « a priori » pourront par exemple être fixés à des valeurs nulles. De façon plus générale, le jeu de paramètres d'initialisation « a priori » pourra comporter d'autres biais ou erreurs des capteurs de la centrale inertielle, ou plus généralement encore du système de navigation inertielle, comme des facteurs d'échelle ou des bras de levier.

Par exemple, les orientations, vitesses et positions du troisième ensemble de données pourront être estimées de façon récursive, à chaque itération de l'étape de correction, au moyen des équations suivantes :

$$[\text{Math. 2}] \ R_{t,i} = R_{t,i-1} . e^{(w_t - b_{g,i}).\Delta t}$$
$$v_{t,i} = v_{t,i} + \left( R_{t,i} . (a_t - b_{a,i}) + g \right). \Delta t$$
$$p_{t,i} = p_{t,i} + v_{t,i} . \Delta t$$

où $R_{t,i}$, $v_{t,i}$ et $p_{t,i}$ sont respectivement une orientation, une vitesse et une position de la centrale inertielle déterminée à un instant t, lors de la ième itération, , $b_{g,i}$ et $b_{a,i}$ sont respectivement un biais initial des accéléromètres de la centrale inertielle et un biais initial des gyromètres de la centrale inertielle déterminés lors de la ième itération, $w_t$ et at sont respectivement une vitesse angulaire et une accélération mesurées par la centrale inertielle à un instant t, g est le vecteur de l'accélération de la pesanteur et $\Delta t$ est un pas temporel employé pour l'estimation successive des orientations, vitesses et positions lors d'une même itération de l'étape de correction.

Selon un exemple de réalisation, chacun de ces biais initiaux « a priori » pourront être fixés à une valeur nulle.

Dans un mode de réalisation de l'invention, ladite fonction d'erreur donnée est déterminée à partir d'une fonction comparative correspondant à la différence entre les données de position du premier ensemble de données de position et du troisième ensemble de données de position, ladite fonction comparative étant calculée à chaque itération de l'étape de correction. Selon cette caractéristique, la fonction comparative peut ainsi être formée d'un vecteur dont chaque élément correspond à la différence entre une donnée du troisième ensemble et une donnée correspondante du premier ensemble, c'est-à-dire d'une donnée dont l'instant d'acquisition par le dispositif de géolocalisation correspond à l'instant avec lequel la donnée du troisième ensemble a été estimée. La fonction d'erreur peut ainsi être une fonction de coût exprimant une distance de cette fonction comparative, que les itérations de l'étape de correction visent à minimiser.

Avantageusement, pour chaque itération de l'étape de correction, la sous-étape de calcul des valeurs de correction du jeu de paramètres d'initialisation comporte la détermination de la covariance de ladite fonction comparative, lesdites valeurs de correction étant calculées à partir de ladite covariance. Dans cet exemple, la fonction comparative peut être basée sur une distance de Mahalanobis de la fonction comparative, qui prend en compte la covariance de la fonction comparative et est particulièrement appropriée aux données employées par l'invention.

Avantageusement toujours, pour chaque itération de l'étape de correction, la sous-étape de calcul des valeurs de correction du jeu de paramètres d'initialisation comporte la détermination de la covariance de ladite fonction comparative et du gradient de la fonction comparative, lesdites valeurs de correction étant calculées à partir de ladite covariance et dudit gradient. Ces itérations mettent alors en oeuvre un algorithme de type Gauss Newton, lequel fait intervenir un gradient de la fonction comparative, sous la forme d'un jacobien de cette fonction, dans le calcul de la fonction d'erreur, appelée dans ce contexte un « résidu ». Chaque itération de la fonction de correction permet ainsi de déterminer, à partir de la covariance et du gradient de la fonction comparative, des valeurs de correction des paramètres initiaux déterminés lors de l'itération précédente, qui permettent de minimiser ce résidu.

Pour chaque itération, ces valeurs de correction pourront notamment être obtenues au moyen de l'équation suivante :

$$[\text{Math. 3}] \ \Delta x = - \left( \left( \frac{\partial f(x)}{\partial x} \right)^T . G^{-1} . \frac{\partial f(x)}{\partial x} \right)^{-1} . \left( \left( \frac{\partial f(x)}{\partial x} \right)^T . G^{-1} . f(x) \right)$$

où $\Delta x$ sont les valeurs de correction, x est le jeu de paramètres d'initialisation déterminé à l'itération précédente, f(x) est la fonction comparative obtenue pour ce jeu x, et G la matrice de covariance de la fonction comparative.

Avantageusement, ledit gradient de la fonction comparative est estimé par une approximation à l'aide d'un opérateur de type différence centrée. En effet, le jacobien de la fonction comparative peut être complexe à déterminer, et requiert ainsi du temps de calcul supplémentaire. Cette caractéristique permet ainsi d'approximer ce gradient, en effectuant un nombre limité d'évaluations supplémentaires de la fonction comparative.

Dans un mode de réalisation de l'invention, ladite fonction d'erreur donnée, employée pour la mise en oeuvre de chaque étape de calcul des valeurs de correction, pourra être déterminée à partir du premier ensemble de données de position, du troisième ensemble de données de position et d'informations additionnelles sur le système de navigation inertielle. Ces informations additionnelles, pouvant être des informations sur les capteurs de la centrale inertielle ou sur le type de porteur, permettent d'introduire une régularisation à chaque itération de l'étape de calcul des valeurs de correction et donc d'améliorer la convergence de l'algorithme vers le jeu de paramètres initiaux optimal.

Avantageusement, pour chaque itération de l'étape de correction, la sous-étape de calcul des valeurs de correction du jeu de paramètres d'initialisation comporte une régularisation à l'aide de valeurs prédéterminées des covariances des paramètres d'initialisation. En d'autres termes, les itérations de l'étape de correction visent à minimiser à la fois une distance donnée de la fonction comparative et une distance donnée des paramètres initiaux eux-mêmes, ce qui permet d'introduire des valeurs statistiques de ces paramètres initiaux connues au préalable et donc d'accélérer encore la convergence de l'algorithme.

De préférence, pour chaque itération, les valeurs de correction pourront notamment être obtenues au moyen de l'équation suivante :

$$[\text{Math. 4}] \ \Delta x = -\left(\left(\frac{\partial f(x)}{\partial x}\right)^T . G^{-1} . \frac{\partial f(x)}{\partial x} + P_{in}^{-1}\right)^{-1} . \left(\left(\frac{\partial f(x)}{\partial x}\right)^T . G^{-1} . f(x) + P_{in}^{-1} . x\right)$$

où $\Delta x$ sont les valeurs de correction, x est le jeu de paramètres d'initialisation déterminé à l'itération précédente, f(x) est la fonction comparative obtenue pour ce jeu x, G est la matrice de covariance de la fonction comparative et $P_{in}$ est la matrice de covariance des paramètres d'initialisation.

Dans cet exemple, la covariance de deux paramètres initiaux distincts pourra être considérée comme nulle, la matrice de covariance des paramètres initiaux étant alors une matrice diagonale, composée des écarts types des paramètres initiaux. Les écarts types des biais initiaux des capteurs sont prédéterminés et sont généralement donnés dans les spécifications de ces capteurs. Les écarts types des orientation et vitesse initiales pourront être estimés en fonction du type du porteur. En particulier, on pourra prévoir de fixer l'écart type de la vitesse initiale a la vitesse maximum que peut emprunter le porteur, soit par exemple 3 m/s pour un piéton ou 100 m/s pour une voiture.

Dans un mode de réalisation de l'invention, ladite condition d'arrêt prédéterminée dépendant des valeurs de correction correspond à une comparaison desdites valeurs de correction à des valeurs seuils prédéterminées, ladite condition d'arrêt étant satisfaite lorsque lesdites valeurs de correction sont inférieures auxdites valeurs seuils prédéterminées.

De préférence, dans le cas où le nombre prédéterminé d'itérations est atteint sans que ladite condition d'arrêt soit satisfaite, les valeurs des paramètres du dernier jeu corrigé pourront être rejetées et un nouvelle itération du procédé pourra éventuellement être mise en oeuvre.

De façon alternative ou cumulative, le procédé pourra comporter une étape de détermination de la covariance des paramètres du jeu optimal de paramètres d'initialisation, et une étape de comparaison, directe ou indirecte, de ces covariances à des valeurs seuils données, les valeurs des paramètres du jeu optimal étant rejetées en fonction de ladite comparaison. Cette caractéristique permet d'écarter des paramètres qui seraient aberrants, notamment au regard de la covariance « a priori » de ces paramètres. Par exemple, dans le cas où lesdits paramètres sont formés par des triplets, on pourra déterminer une valeur d'une norme de la covariance de chaque paramètre du jeu optimal et comparer ladite valeur à une valeur seuil donnée, éventuellement déterminée à partir de l'écart type dudit paramètre initial, ledit paramètre du jeu optimal étant rejeté si ladite norme est supérieure à ladite valeur seuil donnée.

Dans un mode de réalisation de l'invention, le procédé comporte les étapes ultérieures suivantes :

a. Détermination de la covariance des paramètres du jeu optimal de paramètres d'initialisation ;
b. Fourniture des paramètres du jeu optimal de paramètres d'initialisation et de leur covariance à une unité de calcul du système de navigation inertielle comme arguments d'un filtre de Kalman Etendu.

L'invention a également pour objet un système de navigation inertielle embarqué sur un dispositif mobile, le système comportant au moins une centrale inertielle, un dispositif de géolocalisation et une unité de calcul agencée pour mettre en oeuvre le procédé selon l'invention.

L'invention a également pour objet un programme d'ordinateur comprenant un code de programme qui est conçu pour mettre en oeuvre le procédé selon l'invention.

L'invention a également pour objet un support de données sur lequel est enregistré le programme d'ordinateur selon l'invention.

La présente invention est maintenant décrite à l'aide d'exemples uniquement illustratifs et nullement limitatifs de la portée de l'invention, et à partir des dessins annexés, dessins sur lesquels les différentes figures représentent :

[Fig. 1] représente, schématiquement et partiellement, un procédé d'alignement d'un système de navigation inertielle embarqué sur un dispositif mobile selon un mode de réalisation de l'invention ;

[Fig. 2] représente, schématiquement et partiellement, des premier et deuxième ensembles de données relatifs au mouvement du dispositif mobile lors de la mise en oeuvre du procédé de la [Fig. 1] ;

[Fig. 3A] représente, schématiquement et partiellement, une trajectoire du dispositif mobile estimée à l'aveugle lors d'une première itération du procédé de la [Fig. 1] ;

[Fig. 3B] représente, schématiquement et partiellement, une trajectoire du dispositif mobile estimée à l'aveugle lors d'une itération ultérieure du procédé de la [Fig. 1] ; et

[Fig. 3C] représente, schématiquement et partiellement, une trajectoire du dispositif mobile estimée à l'aveugle lors de la dernière itération du procédé de la [Fig. 1].

Dans la description qui suit, les éléments identiques, par structure ou par fonction, apparaissant sur différentes figures conservent, sauf précision contraire, les mêmes références. Bien entendu, diverses autres modifications peuvent être apportées à l'invention dans le cadre des revendications annexées.

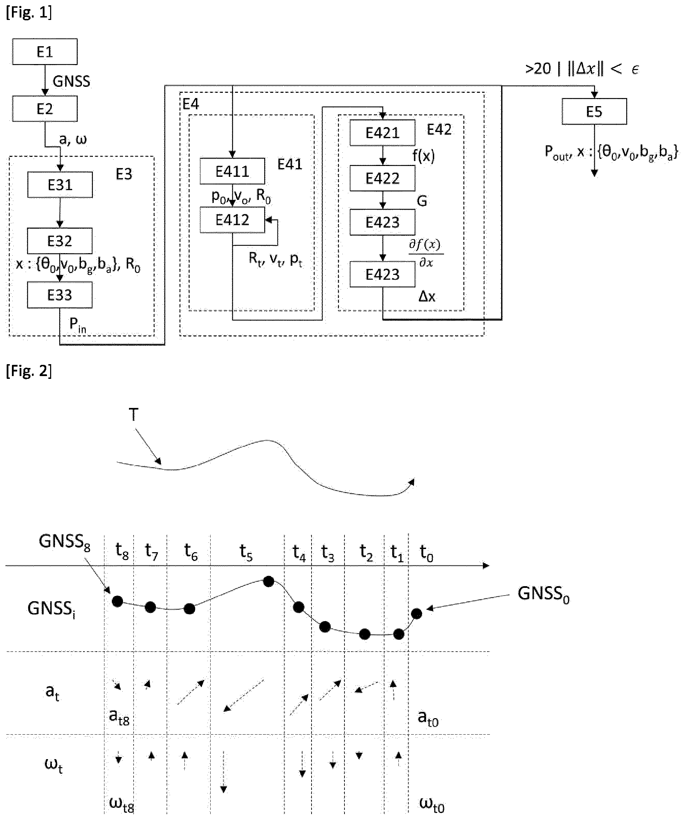

On a représenté en [Fig. 1] un procédé d'alignement d'un système de navigation inertielle embarqué sur un dispositif mobile, ou porteur.

Dans le mode de réalisation qui va être décrit, le système comporte au moins une centrale inertielle et un dispositif de géolocalisation embarqués sur le porteur.

Dans une première étape E1, le dispositif de géolocalisation reçoit un premier ensemble GNSS comportant un nombre n de données de position $GNSS_i$ du porteur lors d'un déplacement du porteur selon une trajectoire T pendant une durée donnée. Dans l'exemple décrit, chaque donnée de position $GNSS_i$ comporte des coordonnées selon un référentiel à trois axes définissant la position du dispositif de géolocalisation dans ce référentiel à un instant $t_i$, ainsi que cet instant $t_i$.

A des fins de simplification, la [Fig. 2] montre la trajectoire T et ces données GNSS dans un référentiel à deux axes, l'ensemble GNSS comportant 9 données $GNSS_0$ à $GNSS_8$, chacune correspondant à un instant $t_0$ à $t_8$, ces instants étant décroissants.

Dans une deuxième étape E2, de façon simultanée à la première étape E1, la centrale inertielle acquiert un deuxième ensemble de données (a,w) de mouvement du porteur acquises pendant le déplacement du porteur selon la trajectoire T. Dans l'exemple décrit, la centrale inertielle est une centrale 6 axes, comportant trois accéléromètres chacun apte à mesurer une accélération du porteur selon l'un des axes du référentiel donné et trois gyromètres chacun apte à mesurer une vitesse angulaire du porteur selon l'un des axes du référentiel donné. Chaque donnée de mouvement comporte ainsi une accélération at et une vitesse angulaire $\omega_t$ de la centrale inertielle à un instant t.

Les données at et $\omega_t$ ont également été reportées en [Fig. 2], sous forme de vecteur à deux dimensions. A des fins de simplifications, il est considéré dans l'exemple décrit que le référentiel des données de position est identique à celui des données de mouvement, étant entendu que, dans le cas où ces référentiels seraient distincts, un changement de repère permettrait de passer de l'un à l'autre. Par ailleurs, seules ont été représentées les données de mouvement correspondant aux instants $t_0$ à $t_8$ d'acquisition des données de position, étant entendu que le nombre de données de mouvement peut être sensiblement supérieur à celui de données de position.

A l'issue de l'acquisition des données GNNS et (a,$\omega$), dans une étape E3, une unité de calcul du système génère un jeu « a priori » x de paramètres d'initialisation de l'alignement du système de navigation inertielle.

Ce jeu de paramètres d'initialisation « a priori » x comporte une orientation initiale de la centrale inertielle « a priori » $\theta_0$, une vitesse initiale de la centrale inertielle « a priori » $v_0$, un biais initial du gyromètre « a priori » $b_g$ et un biais initial de l'accéléromètre « a priori » $b_a$.

Afin d'éviter un problème de blocage de cardan, l'orientation initiale de la centrale inertielle est définie à la fois par une correction angulaire initiale $\theta_0$, sous la forme d'un triplet d'angles, et une matrice de rotation initiale $R_0$, de dimensions 3 par 3, définissant l'attitude du porteur à l'instant $t_0$.

Dans une sous-étape E31, l'unité de calcul peut établir une moyenne de mesures de la gravité acquises par la centrale inertielle lors du déplacement du porteur selon la trajectoire T, afin d'estimer des premières valeurs du tangage initial et du roulis initial de la centrale inertielle.

Dans une sous-étape E32, l'unité de calcul définit ainsi la matrice de rotation initiale $R_0$ telle qu'elle permette d'aligner l'accélération moyenne mesurée par l'accéléromètre sur la gravité, soit $R_0 = e^{\theta g}$, où l'un des éléments de $\theta g$ correspond à ce tangage initial, un autre des éléments correspond à ce roulis initial et le dernier élément est fixé à une valeur nulle. En variante, on pourra prévoir que la matrice de rotation initiale $R_0$ soit une matrice identité. La correction angulaire initiale $\theta_0$ est fixée à une valeur nulle.

Dans la sous-étape E32 également, la vitesse initiale « a priori » $v_0$ est fixée, sous la forme d'un triplet de vitesses selon chacun des axes du référentiel, à une valeur nulle et les biais initiaux « a priori » $b_a$ et $b_g$ sont également fixés, sous la forme de deux triplets, à des valeurs nulles.

Enfin, dans une sous-étape E33, une matrice de covariance $P_{in}$ de ces paramètres initiaux $\theta_0$, $v_0$, $b_g$ et $b_a$ est estimée par l'unité de calcul.

La matrice $P_{in}$ pourra par exemple être une matrice diagonale, dans laquelle le premier triplet d'éléments de la diagonale, correspondant à la covariance de l'orientation initiale, est fixé à une valeur de $\pi$ au carré, le deuxième triplet d'éléments de la diagonale, correspondant à la covariance de la vitesse initiale, est fixé à la vitesse maximum que peut emprunter le porteur au carré, le troisième triplet d'éléments de la diagonale, correspondant à la covariance du biais du gyromètre, est fixé à l'écart-type du biais du gyromètre au carré et, le quatrième triplet d'éléments de la diagonale, correspondant à la covariance du biais de l'accéléromètre, est fixé à l'écart-type du biais de l'accéléromètre au carré.

Cette matrice $P_{in}$ permet d'introduire une régularisation dans l'algorithme qui va être décrit par la suite, afin d'introduire des éléments connus dans le calcul des valeurs optimales des paramètres initiaux et d'accélérer la convergence de l'algorithme. Les valeurs données cidessus pourront être remplacées par n'importe quelle valeur plus précise résultant d'une connaissance « a priori » sur ces paramètres initiaux.

L'unité de calcul met alors en oeuvre une première itération d'une étape de correction E4 du jeu « a priori » x.

A ces fins, dans une première sous-étape E41, l'unité de calcul détermine un troisième ensemble de données de position $p_t$ du porteur pendant son déplacement selon la trajectoire T, à partir des ensembles de données GNNS et $(a,\omega)$.

Plus précisément, dans une sous-étape E411, l'unité de calcul fixe une position initiale du porteur $p_0$ aux coordonnées contenues dans la dernière donnée $GNSS_0$ du premier ensemble GNSS, c'est-à-dire dont l'instant $t_0$ est le plus récent. L'orientation initiale est fixée à $e^{\theta_0}.R_0$ et la vitesse initiale est fixée à $v_0$. On comprend donc que le jeu de paramètres d'initialisation, que l'unité de calcul cherche à déterminer, correspond à l'orientation et à la vitesse de la centrale inertielle ainsi qu'aux biais des capteurs à l'instant $t_0$, lorsque le porteur était dans sa dernière position $GNSS_0$.

Chaque position suivante $p_t$ est alors estimée de façon récursive, dans une sous-étape E412, à partir de la donnée $p_{t-1}$ précédemment estimée, des biais $b_a$ et $b_g$ et des données $(a,\omega)$.

Dans l'exemple décrit, l'unité de calcul estime ainsi une pluralité d'orientations Rt de la centrale inertielle, chacune étant calculée à partir de l'orientation $R_{t-1}$ précédemment calculée, de la vitesse angulaire $\omega_t$ et du biais du gyromètre $b_g$, par exemple au moyen de l'équation suivante :

$$[\text{Math. 5}] \; R_t = R_{t-1}.e^{(w_t - b_g).\Delta t}.$$

L'unité de calcul estime ensuite une pluralité de vitesses vt de la centrale inertielle, chacune étant calculée à partir de la vitesse $v_{t-1}$ précédemment calculée, de l'orientation $R_t$ estimée au calcul précédent, de l'accélération $a_t$ et du biais de l'accéléromètre $b_a$, par exemple au moyen de l'équation suivante :

$$[\text{Math. 6}] \; v_t = v_{t-1} + (R_t.(a_t - b_a) + g).\Delta t.$$

L'unité de calcul estime enfin une pluralité de positions $p_t$ de la centrale inertielle, chacune étant calculée à partir de la position $p_{t-1}$ précédemment calculée et de la vitesse vt estimée au calcul précédent, par exemple au moyen de l'équation suivante :

$$[\text{Math. 7}] \; p_t = p_{t-1} + v_t.\Delta t.$$

Dans cet exemple, le pas $\Delta t$ correspond au décalage entre deux instants successifs d'acquisitions des données $(a,w)$.

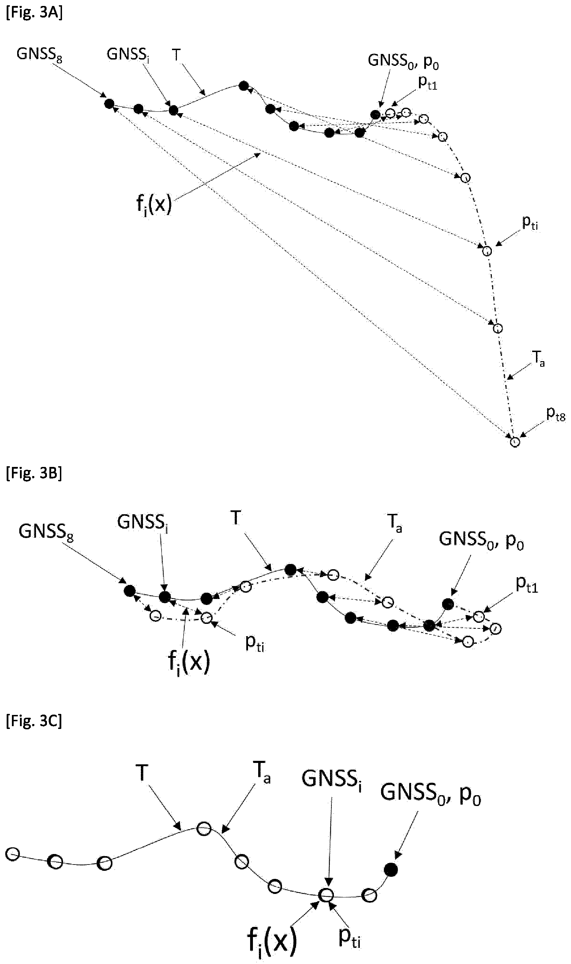

La [Fig. 3A] représente ainsi les positions $p_t$ obtenues par l'unité de calcul à l'issue de cette première itération, lesquelles forment une trajectoire dite « à l'aveugle » $T_a$.

On comprend ainsi que, lors de la première itération, les différentes orientation Rt, vitesses $v_t$ et positions $p_t$ de la centrale inertielle sont estimées récursivement et à rebours à partir de la dernière position $GNSS_0$ connue du porteur et du jeu de paramètres d'initialisation « à priori » x. Les données $p_t$ ainsi obtenues dépendent donc des valeurs du jeu x.

Dans une deuxième sous-étape E42, l'unité de calcul détermine alors des valeurs de correction $\Delta x$ du jeu de paramètres d'initialisation « a priori » x permettant de minimiser une fonction d'erreur, où de cout, sur une fonction comparative f(x) entre les données de position GNSS et les données de position $p_t$ obtenues à partir du jeu de paramètres d'initialisation « à priori » x.

A ces fins, dans une sous-étape E421, l'unité de calcul procède à une estimation de la fonction comparative f(x). Dans l'exemple décrit, cette fonction comparative f(x) est un vecteur dont chaque élément $f_i(x)$ correspond à la différence entre une position d'une donnée $GNSS_i$ à un instant $t_i$ et la position $p_{t_i}$ obtenue pour ce même instant $t_i$. Ces éléments $f_i(x)$ ont été reportées sur la [Fig. 3A], étant entendu que l'élément $f_0(x)$ est par construction nul et est donc omis dans les étapes suivantes.

Il est ainsi possible d'exprimer une distance de cette fonction comparative, laquelle est également fonction de x et qui adopte un minimum pour lequel la trajectoire dite « à l'aveugle » $T_a$ se rapproche de la trajectoire T.

Les étapes suivantes de la sous-étape E42 qui vont désormais être décrites dépendent ainsi du type de distance que l'on cherche à minimiser, étant entendu que d'autres distances pourront être envisagées sans sortir du cadre de la présente invention.

Dans une sous-étape E422, l'unité de calcul estime une covariance G de la fonction comparative f(x), par exemple en l'approximant à l'aide de l'équation suivante :

$$[\text{Math. 8}] \quad G = \frac{\|f(x)\|^2}{n}.$$

Dans une sous-étape E423, l'unité de calcul estime également un gradient $\frac{\partial f(x)}{\partial x}$ de la fonction f(x). Dans l'exemple décrit, ledit gradient est approximé par l'unité de calcul par un opérateur de type différence centrée. La fonction f(x), et donc les positions $p_t$ sont ainsi réévaluées, pour différentes variations élémentaires des paramètres $\theta_0$, $v_0$, $b_g$ et $b_a$ autour de leurs valeurs.

Dans une sous-étape E424, l'unité de calcul détermine des valeurs de correction $\Delta$x, au moyen de la covariance G, du gradient $\frac{\partial f(x)}{\partial x}$, de la matrice de covariance $P_{in}$, de la fonction comparative f(x) et des valeurs des paramètres du jeu x. Ces valeurs de correction $\Delta$x, lorsqu'elles sont appliquées aux valeurs des paramètres du jeu x, permettent de minimiser à la fois une distance de Mahalanobis de la fonction comparative f(x) et cette même distance opérée sur les paramètres initiaux eux-mêmes, ce qui permet de régulariser le calcul.

Dans cet exemple, les valeurs de correction $\Delta$x pourront ainsi être obtenues au moyen de l'équation suivante :

$$[\text{Math. 9}] \quad \Delta x = -\left(\left(\frac{\partial f(x)}{\partial x}\right)^T . G^{-1} . \frac{\partial f(x)}{\partial x} + P_{in}^{-1}\right)^{-1} . \left(\left(\frac{\partial f(x)}{\partial x}\right)^T . G^{-1} . f(x) + P_{in}^{-1} . x\right)$$

Dans une sous-étape E425, la matrice de rotation R0 est mise à jour, à l'aide de la valeur de correction $\Delta\theta_0$ déterminée pour l'angle $\theta_0$, puis cette valeur de correction $\Delta\theta_0$ est réinitialisée à une valeur nulle, ce qui permet d'éviter un blocage de cardan. Puis, les valeurs des paramètres du jeu « a priori » x de paramètres d'initialisation sont mises à jour au moyen des valeurs de correction $\Delta$x, le jeu étant désormais un jeu « corrigé ».

L'étape E4 alors itérée, de nouvelles positions $p_t$ de la trajectoire « à l'aveugle » $T_a$ étant estimées à partir de ce nouveau jeu x de paramètres « corrigé ». Ces nouvelles positions $p_t$ permettent de réestimer la fonction comparative f(x) et donc de recalculer de nouvelles valeurs de correction $\Delta$x.

L'étape de correction est ainsi itérée soit jusqu'à ce qu'une norme des valeurs de correction $\Delta$x soit inférieure à une valeur seuil $\varepsilon$ prédéterminée, soit jusqu'à qu'un nombre prédéterminé d'itérations, par exemple 20, soit atteint. Dans ce cas, le dernier jeu corrigé x forme un jeu optimal de paramètres d'initialisation.

Les itérations de l'étape de correction E4 mettent ainsi en oeuvre un algorithme de type Gauss Newton, qui permet via une descente de gradient, de faire converger le jeu x vers des valeurs optimales pour lesquelles la fonction d'erreur sur la fonction comparative f(x), dénommée dans ce contexte « résidu », est minimale.

Les [Fig. 3B] et [Fig. 3C] montrent ainsi la trajectoire $T_A$ obtenue pour une itération intermédiaire de l'étape de correction E4 et pour la dernière itération de l'étape de correction, la trajectoire $T_A$ étant alors sensiblement identique à la trajectoire T.

Dans une étape E5, l'unité de calcul peut alors déterminée la covariance $P_{out}$ des paramètres du jeu optimal x de paramètres d'initialisation et fournir les paramètres $\theta_0$, $v_0$, $b_g$ et $b_a$ du jeu optimal x et leur covariance $P_{out}$ comme arguments d'un filtre de Kalman Etendu.

On notera que, dans la mesure où le jeu optimal x a été estimée pour la dernière position connue du porteur, à partir de la position $GNSS_0$, ce jeu optimal x est à jour, et peut donc être utilisé en l'état par le filtre de Kalman.

La description qui précède explique clairement comment l'invention permet d'atteindre les objectifs qu'elle s'est fixée, à savoir fournir un procédé d'alignement d'un système de navigation inertielle embarqué sur un dispositif mobile, qui permette de s'affranchir de la connaissance a priori du type du porteur du système, et ainsi de garantir que les paramètres initiaux du système de navigation inertielle peuvent être estimés correctement, quel que soit ce type de porteur.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra prévoir d'autres fonctions d'erreur et d'autres calculs de distance que ceux qui ont été décrits, d'autres méthodes d'approximation des covariances et des gradients que celles qui ont été décrits, d'autres méthodes d'initialisations des valeurs des paramètres que celles qui ont été décrits, voire d'autres types de données de position et/ou de mouvement que ceux qui ont été décrits.

**Revendications**

1. Procédé d'alignement d'un système de navigation inertielle embarqué sur un dispositif mobile, le système comportant au moins une centrale inertielle et un dispositif de géolocalisation, **caractérisé en ce qu'**il comporte les étapes suivantes :

   a. (E1) Réception d'un premier ensemble (GNSS) de données de position ($GNSS_i$) du dispositif mobile acquises par le dispositif de géolocalisation sur une durée donnée ;
   b. (E2) Réception d'un deuxième ensemble ($a,\omega$) de données de mouvement (at, $\omega_t$) du dispositif mobile pendant ladite durée ;
   c. (E3) Génération d'un jeu « a priori » (x) de paramètres ($\theta_0$, $v_0$, $b_g$, $b_a$) d'initialisation de l'alignement du système de navigation inertielle ;
   d. (E4) Correction du jeu « a priori » de paramètres d'initialisation pour obtenir un jeu optimal de paramètres d'initialisation, ladite étape de correction comportant les sous-étapes suivantes :

      i. (E41) Estimation d'un troisième ensemble de données de position ($p_t$) du dispositif mobile sur ladite durée donnée, la première donnée ($p_0$) du troisième ensemble de données de position étant estimée à partir du premier ensemble de données de position (GNSS) ; et chaque donnée suivante ($p_t$) du troisième ensemble étant estimée à partir d'au moins une donnée ($a_t,\omega_t$) du deuxième ensemble ($a,\omega$) de données de mouvement et d'un jeu corrigé (x) de paramètres d'initialisation ;
      ii. (E42) Calcul de valeurs de correction ($\Delta x$) du jeu de paramètres d'initialisation qui minimisent une fonction d'erreur donnée, déterminée à partir du premier ensemble de données de position (GNSS) et du troisième ensemble de données de position ($p_t$) ;
      iii. (E425) Correction du jeu corrigé (x) de paramètres d'initialisation à l'aide des valeurs de correction ($\Delta x$);

      le premier jeu corrigé étant déterminé à partir du jeu « a priori » de paramètres d'initialisation et ladite étape de correction étant itérée jusqu'à ce qu'une condition d'arrêt prédéterminée dépendant des valeurs de correction soit satisfaite et/ou qu'un nombre prédéterminé d'itérations soit atteint, le dernier jeu corrigé formant le jeu optimal de paramètres d'initialisation.

2. Procédé d'alignement selon la revendication précédente, **caractérisé en ce que**, pour chaque sous-étape d'estimation (E41), la première donnée ($p_0$) du troisième ensemble de données de position ($p_t$) est estimée à partir de la dernière donnée ($GNSS_0$) du premier ensemble de données de position (GNSS), et **en ce que** chaque donnée suivante ($p_t$) du troisième ensemble de données de position est estimée de façon récursive à partir de la donnée ($p_{t-1}$) du troisième ensemble de données de position précédemment estimée et de la donnée ($a_t,\omega_t$) du deuxième ensemble ($a,\omega$) de données de position précédant celle utilisée pour l'estimation de la donnée du troisième ensemble précédemment estimée.

3. Procédé d'alignement selon l'une des revendications précédentes, dans lequel chaque donnée ($a_t,\omega_t$) du deuxième ensemble ($a,\omega$) de données de mouvement comporte une accélération ($a_t$) de la centrale inertielle et une vitesse angulaire ($\omega_t$) de la centrale inertielle, dans lequel le jeu (x) de paramètres d'initialisation comporte une orientation initiale ($e^{\theta_0}.R_0$) de la centrale inertielle et une vitesse initiale ($v_0$) de la centrale inertielle, **caractérisé en ce que**, dans chaque sous-étape d'estimation (E41) de chaque itération de l'étape de correction (E4), l'estimation de chaque donnée suivante ($p_t$) comporte :

   a. l'estimation d'une orientation ($R_t$) de la centrale inertielle à partir de l'orientation précédemment estimée ($R_{t-1}$) et de la vitesse angulaire ($\omega_t$) d'une donnée du deuxième ensemble;
   b. l'estimation d'une vitesse ($v_t$) de la centrale inertielle à partir de la vitesse précédemment estimée ($v_{t-1}$), de l'orientation précédemment estimée ($R_t$) et de l'accélération ($a_t$) d'une donnée du deuxième ensemble ;
   c. l'estimation d'une position ($p_t$) de la centrale inertielle à partir de la position précédemment estimée ($p_{t-1}$) et de la vitesse précédemment estimée (vt).

4. Procédé selon la revendication précédente, dans lequel la vitesse initiale ($v_0$) du jeu « a priori » est fixée à une valeur nulle et dans lequel l'orientation initiale ($e^{\theta_0}.R_0$) du jeu (x) « a priori » est déterminée au préalable à partir de la moyenne de mesures de la gravité acquises par la centrale inertielle pendant ladite durée donnée.

5. Procédé selon l'une des revendications 3 ou 4, dans lequel l'orientation initiale de la centrale inertielle est définie à la fois par une correction angulaire initiale ($\theta_0$) et une matrice de rotation initiale ($R_0$), dans laquelle la correction angulaire initiale est réinitialisée à une valeur nulle à chaque itération de l'étape de correction (E4), dans lequel la matrice de rotation initiale est déterminée, à chaque itération de l'étape de correction, à partir de la matrice de rotation initiale précédente et de la correction angulaire initiale, et dans lequel chaque estimation d'une orientation ($R_t$) de la centrale inertielle est une estimation de la matrice de rotation de la centrale inertielle à partir de la matrice de rotation précédemment estimée ($R_{t-1}$) et de la vitesse angulaire ($\omega_t$) d'une donnée du deuxième ensemble.

6. Procédé d'alignement selon l'une des revendications 3 à 6, dans lequel le jeu (x) de paramètres d'initialisation comporte un biais ($b_a$) d'un accéléromètre de la centrale inertielle et un biais ($b_g$) d'un gyromètre de la centrale inertielle, **caractérisé en ce que**, dans chaque sous-étape d'estimation (E41) de chaque itération de l'étape de correction (E4), l'estimation de chaque donnée suivante comporte :

    a. l'estimation d'une orientation ($R_t$) de la centrale inertielle à partir de l'orientation précédemment estimée ($R_{t-1}$), de la vitesse angulaire ($\omega_t$) d'une donnée du deuxième ensemble et du biais du gyromètre ($b_g$) ;
    b. l'estimation d'une vitesse (vt) de la centrale inertielle à partir de la vitesse précédemment estimée ($v_{t-1}$), de l'orientation précédemment estimée (Rt), de l'accélération ($a_t$) d'une donnée du deuxième ensemble et du biais de l'accéléromètre ($b_a$);
    c. l'estimation d'une position ($p_t$) de la centrale inertielle à partir de la position précédemment estimée ($p_{t-1}$) et de la vitesse précédemment estimée (vt).

7. Procédé d'alignement selon l'une des revendications précédentes, **caractérisé en ce que** ladite fonction d'erreur donnée est déterminée à partir d'une fonction comparative (f(x)) correspondant à la différence entre les données de position du premier ensemble de données de position (GNSS) et du troisième ensemble de données de position (pt), ladite fonction comparative étant calculée à chaque itération de l'étape de correction (E4).

8. Procédé d'alignement selon la revendication précédente, **caractérisé en ce que**, pour chaque itération de l'étape de correction (E4), la sous-étape (E42) de calcul des valeurs de correction ($\Delta x$ ) du jeu (x) de paramètres d'initialisation comporte la détermination de la covariance (G) de ladite fonction comparative (f(x)), lesdites valeurs de correction étant calculées à partir de ladite covariance.

9. Procédé d'alignement selon la revendication précédente, **caractérisé en ce que**, pour chaque itération de l'étape de correction (E4), la sous-étape (E42) de calcul des valeurs de correction ($\Delta x$) du jeu (x) de paramètres d'initialisation comporte la détermination de la covariance (G) de ladite fonction comparative (f(x)) et du gradient $\dfrac{\partial f(x)}{\partial x}$ de la fonction comparative, lesdites valeurs de correction étant calculées à partir de ladite covariance et dudit gradient.

10. Procédé d'alignement selon la revendication précédente, **caractérisé en ce que** ledit gradient $\dfrac{\partial f(x)}{\partial x}$ de la fonction comparative (f(x)) est estimé par une approximation à l'aide d'un opérateur de type différence centrée.

11. Procédé d'alignement selon l'une des revendications précédentes, **caractérisé en ce que** ladite fonction d'erreur donnée, employée pour la mise en oeuvre de chaque étape (E42) de calcul des valeurs de correction ($\Delta x$), est déterminée à partir du premier ensemble de données de position (GNSS), du troisième ensemble de données de position ($p_t$) et d'informations additionnelles ($P_{in}$) sur le système de navigation inertielle.

12. Procédé d'alignement selon la revendication précédente, **caractérisé en ce que**, pour chaque itération de l'étape de correction (E4), la sous-étape (E42) de calcul des valeurs de correction ($\Delta x$) du jeu (x) de paramètres d'initialisation comporte une régularisation à l'aide de valeurs prédéterminées des covariances des paramètres d'initialisation ($P_{in}$).

13. Procédé d'alignement selon l'une des revendications précédentes, **caractérisé en ce que** ladite condition d'arrêt prédéterminée dépendant des valeurs de correction ($\Delta x$) correspond à une comparaison desdites valeurs de correction à des valeurs seuils prédéterminées ($\varepsilon$), ladite condition d'arrêt étant satisfaite lorsque lesdites valeurs de correction sont inférieures auxdites valeurs seuils prédéterminées.

14. Procédé d'alignement selon l'une des revendications précédentes, le procédé comportant les étapes ultérieures suivantes :

   a. (E5) Détermination de la covariance ($P_{out}$) des paramètres du jeu (x) optimal de paramètres d'initialisation ;
   b. (E5) Fourniture des paramètres du jeu optimal de paramètres d'initialisation et de leur covariance à une unité de calcul du système de navigation inertielle comme arguments d'un filtre de Kalman Etendu.

15. Système de navigation inertielle embarqué sur un dispositif mobile, le système comportant au moins une centrale inertielle, un dispositif de géolocalisation et une unité de calcul agencée pour mettre en oeuvre le procédé selon l'une des revendications précédentes.

EP 4 545 909 A1

[Fig. 1]

[Fig. 2]

[Fig. 3A]

[Fig. 3B]

[Fig. 3C]

**EP 4 545 909 A1**

Europäisches Patentamt
European Patent Office
Office européen des brevets

# RAPPORT DE RECHERCHE EUROPEENNE

Numéro de la demande

EP 23 20 5270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | XIAOKANG YANG ET AL: "A GNSS Aided Initial Alignment Method for MEMS-IMU Based on Backtracking Algorithm and Backward Filtering", ARXIV.ORG, CORNELL UNIVERSITY LIBRARY, 201 OLIN LIBRARY CORNELL UNIVERSITY ITHACA, NY 14853, 28 février 2022 (2022-02-28), XP091166142, | 1-8, 11-15 | INV. G01C25/00 G01C21/16 |
| A | * abrégé * * figures 1-2 * * I. Introduction * * II. Initial alignment based on backtracking filtering * * II. A. Reverse navigation and its nonlinear error model * * II. B. Backtracking filtering with UKF * * II. C. A novel scheme of GPS-assistant inertial alignment * * III. B. Field test on vehicle * ----- | 9,10 | |
| A | SUN YIDING ET AL: "In-Motion Attitude and Position Alignment for Odometer-Aided SINS Based on Backtracking Scheme", IEEE ACCESS, vol. 7, 6 février 2019 (2019-02-06), pages 20211-20224, XP011711096, DOI: 10.1109/ACCESS.2019.2897638 [extrait le 2019-02-20] * abrégé * * figures 1-2 * * I. Introduction * * IV. Backtracking-scheme-based fine alignment * ----- -/-- | 1-15 | **DOMAINES TECHNIQUES RECHERCHES (IPC)** G01C |

Le présent rapport a été établi pour toutes les revendications

| Lieu de la recherche | Date d'achèvement de la recherche | Examinateur |
|---|---|---|
| La Haye | 15 mars 2024 | Toth, Rémy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

15

Europäisches
Patentamt

European
Patent Office

Office européen
des brevets

# RAPPORT DE RECHERCHE EUROPEENNE

Numéro de la demande

EP 23 20 5270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2009/326740 A1 (WANG JAU-HSIUNG [CA]) 31 décembre 2009 (2009-12-31) * abrégé * * figures 1-6b * * alinéas [0001] - [0007], [0035] - [0037], [0041], [0042], [0049], [0060] - [0064], [0067], [0069], [0077], [0078] * * revendications 1-19 * ----- | 1-15 | |
| A | US 2021/199438 A1 (CHEN QIJIN [CN] ET AL) 1 juillet 2021 (2021-07-01) * abrégé * * figures 1-2 * * alinéas [0002] - [0043], [0062] * * revendications 1-3 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 15 mars 2024 | Toth, Rémy |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 23 20 5270

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2024

| Document brevet cité au rapport de recherche | Date de publication | Membre(s) de la famille de brevet(s) | Date de publication |
|---|---|---|---|
| US 2009326740 A1 | 31-12-2009 | AUCUN | |
| US 2021199438 A1 | 01-07-2021 | CN 111089587 A | 01-05-2020 |
| | | US 2021199438 A1 | 01-07-2021 |

EPO FORM P0460

Pour tout renseignement concernant cette annexe : voir Journal Officiel de l'Office européen des brevets, No.12/82